# FASCICULE DE BREVET EUROPEEN

(11) **EP 1 124 212 B1**
(45) Date de publication et mention de la délivrance du brevet: **27.06.2007**
(21) Numéro de dépôt: 01400334.7
(22) Date de dépôt: 09.02.2001
(51) Int. Cl.: G09B 9/05, G06F 3/00

(54) **Procédé et dispositif de présentation visuelle d'un espace virtuel à trois dimentsions simulant un véhicule automobile**
3D-visuelle Präsentationsmethode und Apparat für Autosimulator
Visual presentation method and device of a virtual 3-D space simulating a car

(30) Priorité: 10.02.2000 FR 0001640
(43) Date de publication de la demande: 16.08.2001
(73) Titulaire: Renault s.a.s., 92100 Boulogne Billancourt (FR)
(72) Inventeur: Regnier, Stéphane, 91430 Igny (FR)

(56) Documents cités:
- EP-A- 0 537 945
- US-A- 4 988 981
- US-A- 5 583 526
- US-A- 6 005 548

## Description

La présente invention se rapporte au domaine technique des systèmes de conception de designs de véhicules, et en particulier aux systèmes de conception de designs de véhicules qui utilisent la réalité virtuelle pour représenter un design particulier.

La conception du design de l'intérieur d'un véhicule est habituellement obtenue par la réalisation de prototypes, le plus souvent de taille réelle, et composés de matériaux, tels que le bois, le plastic, le feutre, ou tout matériau facilement malléable. Ces prototypes permettent une évaluation directe de certains aspects ergonomiques du nouvel intérieur proposé et ce, avant le lancement de la réalisation des prototypes dits opérationnels intégrant le design finalement choisi.

Le moindre changement dans un design de l'intérieur du véhicule peut nécessiter d'importantes modifications du prototype de taille réelle, ces modifications entraînant des pertes de temps et d'argent. En outre, les différents designs possibles pour un même véhicule requièrent chacun la réalisation d'un prototype, ce qui, du fait des coûts engendrés, limite le nombre de designs pour lesquels la fabrication d'un prototype est envisagée.

L'utilisation des techniques de représentation d'espaces virtuels semble particulièrement adaptée pour la conception de designs d'intérieur de véhicules. En effet, elle permet la visualisation des designs sans nécessiter la réalisation de prototypes et donc procure des gains de temps et d'argent conséquents.

Les systèmes de représentation visuelle d'espaces virtuels actuels comportent généralement des moyens de restitution d'images qui sont reliés à des moyens de génération d'images, eux-mêmes pouvant accéder à une base de données contenant, par exemple, les paramètres des images à transmettre aux moyens de restitution. De préférence, les moyens de restitution d'images consistent en un casque, plus ou moins intégral, porté par l'utilisateur, de façon à ce que celui-ci ne perçoive plus que les images émises par les moyens de restitution d'images.

Les moyens de restitution peuvent transmettre à l'utilisateur une unique image. Dans ce cas, la représentation visuelle est dite à deux dimensions. Ils peuvent aussi consister en deux unités, l'une restituant une image spécifiquement pour l'oeil droit de l'utilisateur, l'autre spécifiquement pour l'oeil gauche. Les images émises par les unités sont en cohérence avec la vision binoculaire du système de vision humain de façon à ce que l'utilisateur ait la sensation de percevoir un espace à trois dimensions. La représentation visuelle est dite alors à trois dimensions.

Pour évaluer des aspects d'ergonomie d'un design particulier, il est nécessaire que l'utilisateur puisse modifier la position de certains éléments situés à l'intérieur du véhicule, comme le siège, le volant, les commandes, etc.

La publication US 5 583 526 propose un simulateur de véhicule utilisant la réalité virtuelle, dans lequel l'utilisateur porte des jumelles qui lui restituent une image virtuelle du véhicule, ainsi qu'une image virtuelle de sa main, et d'autres objets qu'il est susceptible de saisir. Pour ce faire, un capteur de position mobile est placé sur la main de l'utilisateur, tandis que certains éléments physiques placés au voisinage de l'utilisateur sont équipés de moyens adaptés pour émettre un signal spécifique lorsqu'ils sont manipulés par l'utilisateur. Une unité de calcul détermine, à partir des deux signaux reçus, la position du premier capteur par rapport à l'élément physique et simule une image virtuelle de la main de l'utilisateur dont la position et les proportions sont fonction des signaux reçus.

Le système de représentation visuelle d'espaces virtuels décrit dans la publication US 5 583 526 permet de calibrer les proportions de l'image virtuelle représentant la main d'un utilisateur au moment où celle-ci manipule un élément physique possédant une image virtuelle correspondante dans la représentation proposée à l'utilisateur.

Toutefois, de façon à proposer une représentation virtuelle de l'intérieur d'un véhicule qui soit satisfaisante pour un utilisateur, en particulier lors de la conception du design de l'intérieur d'un véhicule, il est nécessaire d'effectuer un calibrage de l'ensemble des images présentées à celui-ci, en fonction de sa taille et de la position qu'il occupe, au moment où il positionne sur son visage les moyens de restitutions d'images pour la première fois, c'est-à-dire, dès le début d'une séance de présentation.

La présente invention vise à obtenir un système de présentation visuelle d'espaces virtuels pour lequel les images restituées à l'utilisateur sont adaptées à sa taille et à la position qu'il occupe dans l'espace réel.

Dans ce but, elle propose un procédé de présentation visuelle d'un espace virtuel à trois dimensions à un utilisateur, ledit utilisateur étant équipé de moyens de restitution d'images, restituant des images pour l'oeil gauche et l'oeil droit de l'utilisateur en cohérence avec la vision binoculaire du système de vision humain, lesdites images étant générées par des moyens de génération d'images à partir de paramètres présents dans une base de données, ainsi que de signaux émis par un capteur de position statique par rapport à un élément de référence, et un capteur de position mobile solidaire des moyens de restitution d'images, ledit procédé comprenant une phase de calibrage comportant les étapes suivantes :
- le maintien de l'utilisateur dans une position spécifique,
- le calcul, à partir des signaux émis par le capteur de position mobile, l'utilisateur étant maintenu dans ladite position spécifique, et le capteur de position statique, d'une taille de référence d'utilisateur,
- la génération d'images correspondant à la taille de référence d'utilisateur calculée.

Selon une autre caractéristique de l'invention, la position spécifique est obtenue par la mise en appui de certaines parties du corps de l'utilisateur contre au moins un élément physique, dont la forme, et la position par rapport à l'élément de référence, sont déterminables par les moyens de génération d'images.

Selon une autre caractéristique de l'invention, la taille de référence est égale à la taille réelle de l'utilisateur.

Selon une autre caractéristique de l'invention, la taille de référence est égale à une taille normalisée.

Selon une autre caractéristique de l'invention, l'espace réel dans lequel évolue l'utilisateur inclut, en outre, au moins un objet, possédant une image représentative correspondante dans l'espace virtuel, ledit objet étant équipé d'au moins un capteur de position d'objet, les moyens de génération d'images déterminant, à partir des signaux émis par le capteur de position d'objet, la position de l'objet par rapport à l'élément de référence, et générant une image représentative de l'objet dans l'espace virtuel dont la position correspond à celle de l'objet dans l'espace réel.

L'invention propose aussi un dispositif de représentation visuelle d'un espace virtuel à trois dimensions à un utilisateur, du type comprenant des moyens de génération d'images, adaptés pour transmettre des signaux représentatifs d'images à des moyens de restitution d'images à l'utilisateur, et adaptés pour générer des signaux représentatifs d'images à partir de premières données émises par un premier capteur de position, solidaire des moyens de restitution d'images, et de deuxièmes données émises par un second capteur de position statique, placé à une position fixe par rapport à une base de référence, les moyens de restitution d'images étant adaptés pour diffuser des premières images à destination de l'oeil droit de l'utilisateur, et des secondes images à destination de l'oeil gauche de l'utilisateur, caractérisé en ce qu'il comprend en outre des moyens de calibrage contre lesquels est placé temporairement l'utilisateur, les moyens de génération d'images calculant alors la position du capteur de position mobile par rapport au capteur de position statique, puis déterminant une taille de référence de l'utilisateur en fonction de laquelle les images représentant l'espace virtuel sont générées.

Selon une autre caractéristique de l'invention, le système comprend un siège destiné à supporter l'utilisateur, ledit siège comportant une assise montée mobile sur la base de référence, grâce à des moyens de positionnement comportant un capteur de position d'assise transmettant aux moyens de génération d'images un signal représentatif de la position de l'assise, lesdits moyens de génération d'images déterminant, à partir des signaux émis par le capteur de position statique, et le capteur de position d'assise, la position de l'assise par rapport à la base de référence, et générant, dans l'espace virtuel, des signaux d'images représentant le siège, dont la position, dans l'espace virtuel présenté à l'utilisateur, correspond à celle du siège dans l'espace réel.

Selon une autre caractéristique de l'invention, le siège comprend un dossier relié à l'assise, et inclinable par rapport à celle-ci, grâce à des moyens faisant charnières comportant un capteur d'inclinaison de dossier transmettant aux moyens de génération d'images un signal représentatif de l'inclinaison du dossier, lesdits moyens de génération d'images déterminant, à partir des signaux émis le capteur de position d'assise et le capteur d'inclinaison de dossier, la position du dossier par rapport à la base de référence, et générant, dans l'espace virtuel, des signaux d'images représentant le siège, dont la position et l'inclinaison du dossier, dans l'espace virtuel présenté à l'utilisateur, correspond à celle du dossier dans l'espace réel.

Selon une autre caractéristique de l'invention, les moyens de génération d'images comprennent un premier module de génération d'images adapté pour générer des premiers signaux représentatifs des premières images et un deuxième module de génération d'images adapté pour générer des seconds signaux représentatifs des secondes images, les deux modules de génération d'images échangeant des données entre eux de façon à assurer une cohérence temporelle lors de la génération desdits premiers signaux et desdits deuxièmes signaux.

Selon une autre caractéristique de l'invention, les deux modules de génération d'images échangent des données entre eux pour synchroniser l'envoi aux moyens de restitution d'images des premiers signaux et des deuxièmes signaux.

D'autres caractéristiques et avantages de l'invention apparaîtront à la lecture de la description qui va suivre en référence aux dessins dans lesquels :
- la figure 1 représente le dispositif de présentation visuelle d'espaces virtuels d'un véhicule selon l'invention tel qu'utilisé lors d'une séance de présentation,
- la figure 2 représente un détail du dispositif de la figure 1 dans lequel apparaissent les moyens de calibrage du dispositif,
- la figure 3 présente, de façon schématique, l'architecture des moyens de génération d'images du système, et des éléments associés, selon l'invention.

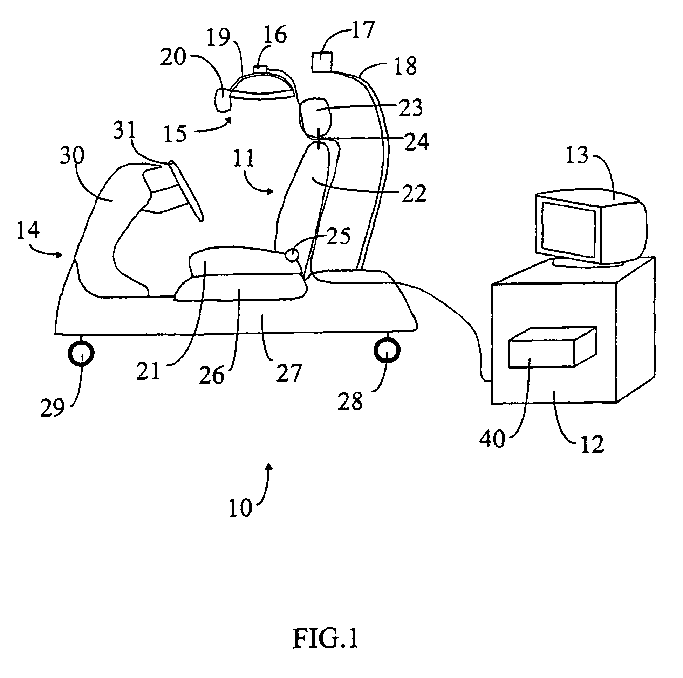

Le dispositif 10 de présentation visuelle d'espaces virtuels, tel que représenté sur la figure 1, se compose d'un modèle de véhicule 14 venant reproduire sommairement une partie de l'intérieur de l'habitacle d'un véhicule automobile. Le modèle 14 comprend une base 27 qui reproduit, de manière simplifiée, l'allure du châssis d'un véhicule automobile, et qui peut, éventuellement, être mobile au moyen de roulettes 28,29, les roulettes avants 29 pouvant être directionnelles pour faciliter le déplacement de la base 27. Par la suite, on appellera direction longitudinale, la direction de la base 27 équivalente à la direction longitudinale traditionnellement utilisée pour un véhicule automobile.

Le modèle 14 comprend également un siège 11 monté sur la base 27. Le siège 11 se compose d'une assise 21 reliée à la base 27 par l'intermédiaire de moyens de positionnement longitudinal 26, qui autorisent le déplacement de l'assise 21 par rapport à la base 27 dans la direction longitudinale. Ces moyens de positionnement longitudinal 26 comprennent un capteur de position longitudinal (non représenté) adapté pour émettre un signal représentatif de la position de l'assise 21 du siège 11 par rapport à la base 27.

Le siège 11 comprend également un dossier 22, inclinable par rapport à l'assise 21, grâce des moyens faisant charnière 25 qui comprennent un capteur d'inclinaison adapté pour émettre un signal représentatif de la position angulaire du dossier 22 par rapport à l'assise 21.

Le siège 11 comprend finalement un appui-tête 23, amovible, qui est fixé sur une extrémité du dossier 22 du siège 11 par une ou deux tiges 24 venant coopérer avec des moyens d'accrochage (non représentés) disposés sur le dossier 22. L'appui-tête 23 peut être complètement retiré du dossier 22.

Le modèle 14 comprend finalement un cockpit simplifié 30, supporté par la base 27, pouvant comporter un pédalier (non représenté), et une planche de bord, celle-ci pouvant se limiter à un volant 31.

Le dispositif selon l'invention comprend également de moyens de restitution d'images 15 recevant des signaux émis par des moyens de génération d'images 12. Les moyens de restitution d'images 15 se composent d'un élément de vision 20 que l'utilisateur (non représenté) vient placer, à sa convenance, au niveau de ses yeux, au moyen d'éléments de maintien 19. Sur la figure 1, les moyens de restitution d'images 15 sont placés, par rapport au modèle 14 du véhicule, sensiblement à la position qu'ils occuperaient s'ils étaient effectivement portés par un utilisateur.

L'élément de vision 20 contient deux unités d'affichage d'images (non représentées), la première restituant des premières images qui sont perçues uniquement par l'oeil gauche de l'utilisateur, et la seconde restituant des secondes images perçues uniquement par l'oeil droit de l'utilisateur. La vision stéréoscopique est obtenue par le fait que les images restituées par les deux unités sont, à un même moment, en cohérence avec la vision binoculaire du système de vision humain.

Les moyens de génération d'images 12 sont reliés à un capteur de position statique 17, monté sur un support 18, et fixe par rapport à la base 27 du modèle 14, et à un capteur de position mobile 16, solidaire des moyens de restitution d'images 15. Ces capteurs 16,17 sont connus de l'homme du métier et peuvent être du type optiques, inertiels, électromagnétiques ou mécaniques. Ils envoient des signaux vers les moyens de génération d'images 12, à partir desquels ceux-ci déterminent la position et l'orientation du capteur mobile 16 par rapport au capteur fixe 17.

Les moyens de restitution d'images 12 reçoivent, en outre, les signaux transmis par le capteur de position longitudinale des moyens de positionnement longitudinal 26, et le capteur d'inclinaison des moyens faisant charnière 25.

Les moyens de génération d'images 12 comprennent une base de données 40 contenant divers paramètres à partir desquels les moyens de génération d'images 12 élaborent les différentes images envoyées aux moyens de restitution d'images 15. Les paramètres présents dans la base de données 40 sont relatifs au type d'image que l'on souhaite voir apparaître dans la présentation. Typiquement, ces paramètres permettent la création d'images représentant l'intérieur de l'habitacle d'un véhicule.

Finalement, les moyens de génération d'images 12 sont reliés à une interface homme machine 13, comprenant, par exemple, un écran d'affichage et un clavier de saisie de données, au moyen desquels l'utilisateur, ou une tierce personne, sélectionne différents paramètres de la base de données 40 qui seront utilisés par les moyens de génération d'images 12.

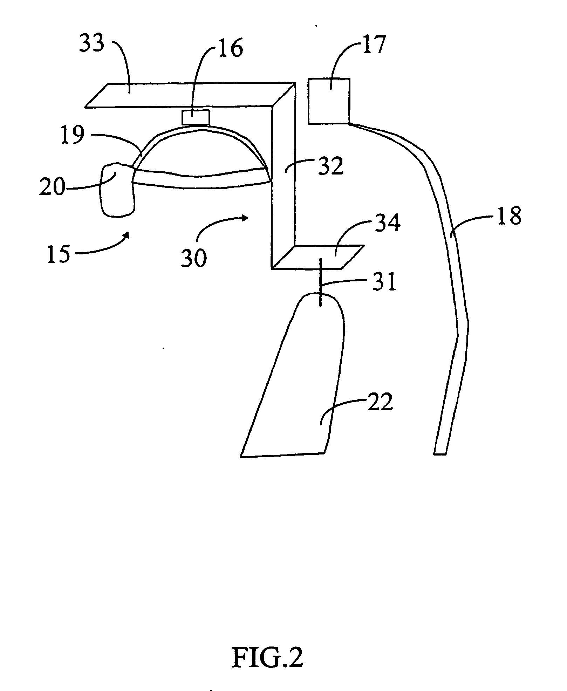

L'appui-tête 23 peut être retiré et remplacé par un élément de calibrage 30, représenté sur la figure 2. Celui-ci comporte, comme l'appui-tête 23, au moins une tige 31 venant coopérer avec les moyens d'accrochage du dossier 22. L'enfoncement plus ou moins important de la tige 31 dans les moyens d'accrochage détermine la position de l'élément de calibrage 30 par rapport au dossier 22. Il comprend une paroi de support 34 sur laquelle est montée la tige 31. La paroi de support 34 est reliée à une extrémité d'une première paroi d'appui 32, préférentiellement plane, elle-même étant reliée, à son extrémité opposée, à une seconde paroi d'appui 33, également préférentiellement plane. Les deux parois d'appui 32,33 forment un angle sensiblement égal à 90 degrés.

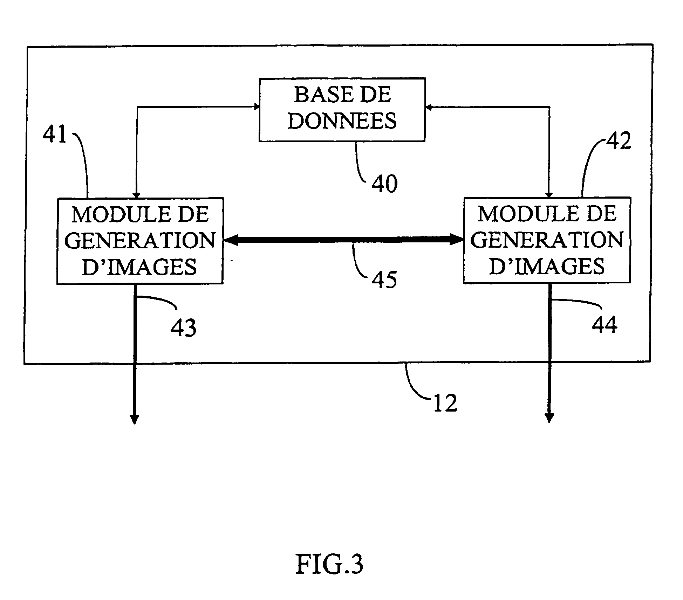

La figure 3 représente de façon plus précise certains éléments constituant les moyens de génération d'images 12. Les différents signaux représentant des images sont élaborés par deux modules de génération d'images, respectivement 41 et 42. Chaque module de génération 41,42 se compose, de façon connue, d'un microprocesseur associé à une zone de mémoire, et est relié à la base de données 40 dans laquelle il peut lire les données mémorisées. Chaque module de génération d'images 41,42 reçoit les signaux émis par le capteur de position statique 17, le capteur de position mobile 16, le capteur d'inclinaison des moyens formant charnière 25, et le capteur de position longitudinale des moyens de positionnement longitudinal 26. Chaque module 41,42 est adapté pour créer et émettre un signal représentatif d'une image, appelé signal vidéo, qui est fonction à la fois des paramètres de la base de données 40 et des signaux émis par les capteurs de position statique 17 et mobile 16, le capteur d'inclinaison des moyens formant charnière 25, et le capteur de position longitudinale des moyens de positionnement longitudinal 26.

Le signal vidéo est émis par chaque module de génération d'images 41,42 sur un canal vidéo 43,44. De préférence, chaque module des moyens de restitution d'images 15 comporte sa propre entrée. Un canal vidéo 43,44 peut être branché directement sur une unité d'affichage d'images qui restitue une image à partir du signal vidéo émis par le module de génération d'images 43,44 associé.

Selon une variante de l'invention, les moyens de restitution d'images 15 ne comportent qu'une entrée de signal vidéo. Dans ce cas, il est nécessaire d'utiliser un module intermédiaire (non représenté) comprenant deux entrées reliées aux canaux 43,44 et une sortie reliée aux moyens de restitution d'images 15. Ce module intermédiaire permet la conversion des deux signaux émis par les deux modules de génération d'images 41,42 en un signal utilisable par les moyens de restitution d'images 15.

Les deux modules de génération d'images 41,42 sont reliés par une liaison série 45 de façon à échanger des données entre elles pour réaliser un envoi synchronisé de signaux vidéo. Ils peuvent aussi être reliés par une liaison réseau.

Un protocole de communication est mis en place sur les modules de génération d'images 41,42 de façon à permettre l'échange des données sur la liaison série 45. Cet échange est réalisé lorsque chaque module 41,42 a achevé le calcul de la prochaine image à transmettre, et permet l'envoi synchronisé des signaux vidéos.

Selon une autre variante de la présente invention, le volant 31 ainsi que les pédales de pédalier du cockpit 30 sont susceptibles d'être manoeuvrés par l'utilisateur. Dans ce cas, ces éléments peuvent être équipés de capteurs de position, chaque capteur envoyant un signal, représentatif de la position de l'élément correspondant, aux moyens de génération d'images 12, qui sont capables, à partir du signal du capteur de position statique 17, d'en déduire la position relative entre ces éléments et la base 27 du modèle de véhicule 14.

Une séance de présentation visuelle d'espaces virtuels débute par une phase de calibrage :

L'appui-tête 23 est retiré du dossier 22 et remplacé par le système de référence 30. Un utilisateur, portant les moyens de restitution d'images 15, vient s'asseoir sur le siège 11 selon une position spécifique. En effet, il vient plaquer son dos contre le dossier 22, et l'arrière de son crâne contre la première paroi d'appui 32 du système de référence 30. A ce moment, la seconde paroi d'appui 33 du système de référence 30 est mise en contact avec le sommet du crâne de l'utilisateur, ou éventuellement avec un élément des moyens de restitution d'images 15, en faisant enfoncer la tige 31 dans les moyens d'accrochage du dossier 22.

Les moyens de génération d'images 12 enregistrent alors la position spatiale de l'utilisateur au moyen des signaux émis par le capteur de position mobile 16 et le capteur de position statique 17, ainsi que ceux émis par le capteur d'inclinaison des moyens faisant charnière 25, et le capteur de position longitudinale des moyens de positionnement longitudinal 26. Cette position est mise en relation avec une position de référence à partir de laquelle les moyens de génération d'images 12 calculent les signaux représentant les images envoyés aux moyens de restitution d'images 15. Cette position par rapport au siège 11, imposée à l'utilisateur, ainsi que la connaissance de la position du siège 11 par rapport à la base 27, permettent aux moyens de génération d'images 12 de débuter une séance de présentation visuelle d'espaces virtuels en générant des signaux représentant des images qui correspondent exactement à la position réellement occupée par l'utilisateur.

Le système de référence 30 est alors remplacé par l'appui-tête 23 et la séance de présentation visuelle d'espaces virtuels peut se dérouler normalement. Les moyens de génération d'images 12 modifient en temps réel les signaux représentant des images générés en fonction de la position et de l'orientation du capteur mobile 16 par rapport au capteur statique 17, c'est-à-dire en fonction de la position et de l'orientation des moyens de restitution d'images 15, ce qui caractérise l'endroit vers lequel l'utilisateur porte son regard.

L'utilisateur peut à tout moment modifier la position longitudinale de l'assise 21 par rapport à la base 27. Les moyens de génération d'images 12 tiennent compte de ce déplacement, et simulent un déplacement du siège virtuel sur les signaux d'images générés, grâce au signal émis par le capteur de position longitudinale des moyens de positionnement longitudinal 26, de façon à ce que la position du siège virtuel sur les images restituées soit cohérente avec la position réellement occupée par le siège 11. De même, l'utilisateur peut à tout moment modifier l'inclinaison du dossier 22 par rapport à l'assise 21. Les moyens de génération d'images 12 tiennent compte cette nouvelle inclinaison, et simulent un déplacement du dossier virtuel sur les images restituées, grâce au signal émis par le capteur d'inclinaison des moyens faisant charnière 25.

Selon la variante de l'invention, dans le cas où le volant 31 ou les pédales du pédalier sont manoeuvrables et équipés de capteurs de position, une action de l'utilisateur sur ces éléments provoque une modification, dans les signaux d'images générés par les moyens de génération d'images 12, de la position de l'élément virtuel correspondant à l'élément réel de façon à ce que la position de l'élément virtuel sur les images restituées soit cohérente avec la position réellement occupée par l'élément correspondant.

La position spécifique, à partir de laquelle les moyens de génération 12 génèrent les signaux d'images envoyés aux moyens de restitution 15, peut correspondre à la taille réelle de l'utilisateur. Toutefois, elle peut être choisie égale à une position standard, selon des normes propres au domaine technique de la construction automobile, ce qui permet à l'utilisateur de se représenter virtuellement l'intérieur de l'habitacle du véhicule tel que perçu par un individu dont la taille est égale à une taille standard.

La présente invention est particulièrement adaptée pour la conception du design d'un véhicule. En effet, la base de données peut contenir les paramètres décrivant différentes couleurs, matières, textures, dispositions d'accessoires, etc. Grâce à l'interface homme/machine, il est possible de concevoir un design qui sera visualisé par l'utilisateur. Les dimensions et les distances, ainsi que les couleurs et l'ambiance lumineuse peuvent être choisies avec précision.

Il est possible à tout moment, et instantanément, de modifier un élément du design du véhicule. L'utilisateur peut ainsi disposer de l'ensemble de designs possibles et faire un choix parmi ceux-ci. L'ajout de nouveaux designs est obtenu par simples ajouts ou modifications des paramètres de la base de données.

De plus, le dispositif de présentation visuelle d'espaces virtuels selon l'invention permet d'étudier et d'optimiser l'ergonomie de l'habitacle du véhicule, de voir les interactions entre un utilisateur virtuel ayant une taille de référence déterminée, et le monde virtuel étudié. En modifiant la taille de référence, il est possible de faire apparaître, avec un même utilisateur, différents aspects ergonomiques sur un véhicule qui sont spécifiques à des tailles de conducteurs différentes.

L'utilisation de deux modules de génération d'images permet d'obtenir, lors d'une présentation visuelle d'espaces virtuels, une fluidité et une précision de détails satisfaisantes pour l'utilisateur sans que le système de présentation visuelle d'espaces virtuels ne présente un coût excessif.

La présente invention n'est nullement limitée au mode de réalisation décrit et illustré qui n'a été donné qu'à titre d'exemple. Au contraire, l'invention comprend tous les équivalents techniques des moyens décrits ainsi que leurs combinaisons si celles-ci sont effectuées suivant son esprit.

Ainsi les moyens de restitution d'images peuvent-ils se présenter sous la forme de jumelles maintenues manuellement par l'utilisateur et supportant le capteur de position mobile.

## Revendications

1. Procédé de présentation visuelle d'un espace virtuel à trois dimensions à un utilisateur, ledit utilisateur étant équipé de moyens de restitution d'images (15), restituant des images pour l'oeil gauche et l'oeil droit de l'utilisateur en cohérence avec la vision binoculaire du système de vision binoculaire humain, lesdites images étant générées par des moyens de génération d'images (12) à partir de paramètres présents dans une base de données (40), ainsi que de signaux émis par un capteur de position statique (17) par rapport à un élément de référence (27), et un capteur de position mobile (16) solidaire des moyens de restitution d'images (15), **caractérisé en ce qu'**il comprend une phase de calibrage comportant les étapes suivantes :
- le maintien de l'utilisateur dans une position spécifique,
- le calcul d'une taille de référence d'utilisateur, a partir des signaux émis par le capteur de position mobile (16), l'utilisateur étant maintenu dans ladite position spécifique, et le capteur de position statique (17),
- la génération d'images correspondant à la taille de référence d'utilisateur calculée.

2. Procédé selon la revendication 1, **caractérisé en ce que** la position spécifique est obtenue par la mise en appui de certaines parties du corps de l'utilisateur contre au moins un élément physique (11,30), dont la forme, et la position par rapport à l'élément de référence (27), sont déterminables par les moyens de génération d'images (12).

3. Procédé selon les revendications 1 ou 2, **caractérisé en ce que** la taille de référence est égale à la taille réelle de l'utilisateur.

4. Procédé selon les revendications 1 ou 2, **caractérisé en ce que** la taille de référence est égale à une taille normalisée.

5. Procédé selon l'une des revendications 1 à 4, **caractérisé en ce que** l'espace réel dans lequel évolue l'utilisateur inclut, en outre, au moins un objet (11,31), possédant une image représentative correspondante dans l'espace virtuel, ledit objet (11,31) étant équipé d'au moins un capteur de position d'objet, les moyens de génération d'images (12) déterminant, à partir des signaux émis par le capteur de position d'objet, la position de l'objet (11,31) par rapport à l'élément de référence (27), et générant une image représentative de l'objet dans l'espace virtuel dont la position correspond à celle de l'objet dans l'espace réel.

6. Dispositif (10) de représentation visuelle d'un espace virtuel à trois dimensions à un utilisateur, du type comprenant des moyens de génération d'images (12), adaptés pour transmettre des signaux représentatifs d'images à des moyens de restitution d'images (15) à l'utilisateur, et adaptés pour générer des signaux représentatifs d'images à partir de premières données émises par un premier capteur de position (16), solidaire des moyens de restitution d'images (15), et de deuxièmes données émises par un second capteur de position statique (17), placé à une position fixe par rapport à une base de référence (27), les moyens de restitution d'images (15) étant adaptés pour diffuser des premières images à destination de l'oeil droit de l'utilisateur, et des secondes images à destination de l'oeil gauche de l'utilisateur, **caractérisé en ce qu'**il comprend en outre des moyens de calibrage (11,30) contre lesquels est placé temporairement l'utilisateur, les moyens de génération d'images (12) calculant alors la position du capteur de position mobile (16) par rapport au capteur de position statique (17), puis déterminant une taille de référence de l'utilisateur en fonction de laquelle les images représentant l'espace virtuel sont générées.

7. Dispositif de présentation visuelle d'un espace virtuel selon la revendication 6, **caractérisé en ce qu'**il comprend un siège (11) destiné à supporter l'utilisateur, ledit siège (11) comportant une assise (21) montée mobile sur la base de référence (27) grâce à des moyens de positionnement (26) comportant un capteur de position d'assise transmettant aux moyens de génération d'images (12) un signal représentatif de la position de l'assise (21), lesdits moyens de génération d'images déterminant, à partir des signaux émis par le capteur de position statique (17), et le capteur de position d'assise, la position de l'assise (21) par rapport à la base de référence (27), et générant, dans l'espace virtuel, des signaux d'images représentant le siège (11), dont la position, dans l'espace virtuel présenté à l'utilisateur, correspond à celle du siège (11) dans l'espace réel.

8. Dispositif de présentation visuelle d'un espace virtuel selon les revendications 6 ou 7, **caractérisé en ce que** le siège (11) comprend un dossier (22) relié à l'assise (21), et inclinable par rapport à celle-ci, grâce à des moyens faisant charnières (25) comportant un capteur d'inclinaison de dossier transmettant aux moyens de génération d'images (12) un signal représentatif de l'inclinaison du dossier (22), lesdits moyens de génération d'images (12) déterminant, à partir des signaux émis le capteur de positon d'assise et le capteur d'inclinaison de dossier, la position du dossier (22) par rapport la base de référence (27), et générant, dans l'espace virtuel, des signaux d'images représentant le siège (11), dont la position et l'inclinaison du dossier (22), dans l'espace virtuel présenté à l'utilisateur, correspond à celle du dossier (11) dans l'espace réel.

9. Dispositif de présentation visuelle d'un espace virtuel selon l'une des revendications 6 à 8, **caractérisé en ce que** les moyens de génération d'images (12) comprennent un premier module de génération d'images (41) adapté pour générer des premiers signaux représentatifs des premières images et un deuxième module de génération d'images (42) adapté pour générer des seconds signaux représentatifs des secondes images, les deux modules de génération d'images (41,42) échangeant des données entre eux de façon à assurer une cohérence temporelle lors de la génération desdits premiers signaux et desdits deuxièmes signaux.

10. Dispositif de présentation visuelle d'un espace virtuel selon la revendication 9, **caractérisé en ce que** les deux modules de génération d'images (41,42) échangent des données entre eux pour synchroniser l'envoi aux moyens de restitution d'images (15) des premiers signaux et des deuxièmes signaux.

## Claims

1. Method of visually presenting a three-dimensional virtual space to a user, the said user being equipped with means (15) for restoring images, restoring images for the left eye and the right eye of the user consistent with the binocular vision of the human binocular vision system, the said images being generated by image generation means (12) based on parameters present in a database (40), and signals emitted by a position sensor (17) that is static relative to a reference element (27), and a movable position sensor (16) fixedly attached to the means (15) for restoring images, **characterized in that** it comprises a calibration phase including the following steps:
- holding the user in a specific position,
- computing a user reference size based on the signals emitted by the movable position sensor (16), the user being held in the said specific position, and the static position sensor (17),
- generating images corresponding to the computed user reference size.

2. Method according to Claim 1, **characterized in that** the specific position is obtained by resting certain portions of the body of the user against at least one physical element (11, 30) whose shape and position relative to the reference element (27) can be determined by the image generation means (12).

3. Method according to Claims 1 or 2, **characterized in that** the reference size is equal to the actual size of the user.

4. Method according to Claims 1 or 2, **characterized in that** the reference size is equal to a standard size.

5. Method according to one of Claims 1 to 4, **characterized in that** the real space in which the user moves also includes at least one object (11, 31), having a corresponding representative image in the virtual space, the said object (11, 31) being fitted with at least one object position sensor, the image generation means (12) determining, based on the signals emitted by the object position sensor, the position of the object (11, 31) relative to the reference element (27), and generating an image representative of the object in the virtual space whose position corresponds to that of the object in the real space.

6. Device (10) for visually representing a three-dimensional virtual space to a user, of the type comprising image generation means (12), suitable for transmitting signals representative of images to means (15) for restoring images to the user, and suitable for generating signals representative of images based on first data emitted by a first position sensor (16), fixedly attached to the means (15) for restoring images, and second data emitted by a second static position sensor (17) placed in a position that is fixed relative to a reference base (27), the means (15) for restoring images being suitable for broadcasting first images to the right eye of the user, and second images to the left eye of the user, **characterized in that** it also comprises calibration means (11, 30) against which the user is temporarily placed, the image generation means (12) then computing the position of the movable position sensor (16) relative to the static position sensor (17), then determining a reference size of the user according to which the images representing the virtual space are generated.

7. Device for visually presenting a virtual space according to Claim 6, **characterized in that** it comprises a seat (11) designed to support the user, the said seat (11) comprising a squab (21) mounted so as to move on the reference base (27) thanks to positioning means (26) comprising a squab position sensor transmitting to the image generation means (12) a signal representative of the position of the squab (21), the said image generation means determining, based on the signals emitted by the static position sensor (17) and the squab position sensor, the position of the squab (21) relative to the reference base (27), and generating, in the virtual space, signals of images representing the seat (11), whose position in the virtual space presented to the user corresponds to that of the seat (11) in the real space.

8. Device for visually presenting a virtual space according to Claims 6 or 7, **characterized in that** the seat (11) comprises a back (22) that is connected to the squab (21) and can be inclined relative to the latter, thanks to means forming hinges (25) comprising a back inclination sensor transmitting to the image generation means (12) a signal representative of the inclination of the back (22), the said image generation means (12) determining, based on the signals emitted by the squab position sensor and the back inclination sensor, the position of the back (22) relative to the reference base (27), and generating, in the virtual space, signals of images representing the seat (11), of which the position and inclination of the back (22), in the virtual space presented to the user, corresponds to that of the back (11) in the real space.

9. Device for visually presenting a virtual space according to one of Claims 6 to 8, **characterized in that** the image generation means (12) comprise a first image generation module (41) suitable for generating first signals representative of first images and a second image generation module (42) suitable for generating second signals representative of second images, the two image generation modules (41, 42) exchanging data between them so as to ensure a temporal consistency when the said first signals and the said second signals are generated.

10. Device for visually presenting a virtual space according to Claim 9, **characterized in that** the two image generation modules (41, 42) exchange data between them to synchronize the transmission of the first signals and the second signals to the means (15) for restoring images.

## Patentansprüche

1. Verfahren zur visuellen Darstellung eines dreidimensionalen Raums für einen Benutzer, wobei der Benutzer mit Mitteln zur Bildwiedergabe (15) ausgestattet ist, die Bilder für das linke Auge und das rechte Auge des Benutzers in Kohärenz mit der binokularen Sicht des menschlichen binokularen Sehsystems wiedergeben, wobei die Bilder durch Bilderzeugungsmittel (12) aus Parametern, die in einer Datenbasis (40) vorhanden sind, sowie Signalen erzeugt werden, die von einem statischen Positionsgeber (17) in Bezug zu einem Referenzelement (27) und einem beweglichen Positionsgeber (16), der mit den Bildwiedergabemitteln (15) verbunden ist, entsandt werden, **dadurch gekennzeichnet, dass** es eine Phase der Kalibrierung umfasst, die die folgenden Schritte aufweist:
- Halten des Benutzers in einer spezifischen Position,
- Berechnung einer Benutzerreferenzgröße aus Signalen, die vom beweglichen Positionsgeber (16), wobei der Benutzer in der spezifischen Position gehalten wird, und vom statischen Positionsgeber (17) entsandt werden,
- Erzeugung von Bildern, die der berechneten Benutzerreferenzgröße entsprechen.

2. Verfahren nach Anspruch 1, **dadurch gekennzeichnet, dass** die spezifische Position durch Anlage gewisser Körperteile des Benutzers an mindestens ein physisches Element (11, 30) erhalten wird, dessen Form und Position in Bezug zum Referenzelement (27) von den Bilderzeugungsmitteln (12) bestimmt werden können.

3. Verfahren nach den Ansprüchen 1 oder 2, **dadurch gekennzeichnet, dass** die Referenzgröße gleich der tatsächlichen Größe des Benutzers ist.

4. Verfahren nach den Ansprüchen 1 oder 2, **dadurch gekennzeichnet, dass** die Referenzgröße gleich einer Normgröße ist.

5. Verfahren nach einem der Ansprüche 1 bis 4, **dadurch gekennzeichnet, dass** der tatsächliche Raum, in dem sich der Benutzer bewegt, ferner mindestens einen Gegenstand (11, 31) einschließt, der ein entsprechendes repräsentatives Bild in dem virtuellen Raum besitzt, wobei der Gegenstand (11, 31) mit mindestens einem Positionsgeber des Gegenstandes ausgestattet ist, wobei die Bilderzeugungsmittel (12) aus vom Positionsgeber des Gegenstandes entsandten Signalen die Position des Gegenstandes (11, 31) in Bezug zum Referenzelement (27) bestimmen und ein repräsentatives Bild des Gegenstandes im virtuellen Raum erzeugen, dessen Position jener des Gegenstandes im realen Raum entspricht.

6. Vorrichtung (10) zur visuellen Darstellung eines virtuellen dreidimensionalen Raums für einen Benutzer, umfassend Bilderzeugungsmittel (12), die dazu vorgesehen sind, für Bilder repräsentative Signale an Bildwiedergabemittel (15) für den Benutzer zu übertragen und für Bilder repräsentative Signale aus ersten Daten, die von einem ersten Positionsgeber (16) entsandt werden, der mit den Bildwiedergabemitteln (15) verbunden ist, und aus zweiten Daten zu erzeugen, die von einem zweiten statischen Positionsgeber (17) entsandt werden der in einer festen Position in Bezug zu einer Referenzbasis (27) angeordnet ist, wobei die Bildwiedergabemittel (15) dazu vorgesehen sind, erste Bilder in Richtung des rechten Auges des Benutzers und zweite Bilder in Richtung des linken Auges des Benutzers zu verbreiten, **dadurch gekennzeichnet, dass** sie ferner Kalibriermittel (11, 30), an denen vorübergehend der Benutzer vorgesehen ist, und Mittel zur Erzeugung von Bildern (12) umfasst, die nun die Position des beweglichen Positionsgebers (16) in Bezug zu dem statischen Positionsgeber (17) berechnen und dann eine Benutzerreferenzgröße bestimmen, in Abhängigkeit von der die den virtuellen Raum darstellenden Bilder erzeugt werden.

7. Vorrichtung zur visuellen Darstellung eines virtuellen Raums nach Anspruch 6, **dadurch gekennzeichnet, dass** sie einen Sitz (11) umfasst, der dazu bestimmt ist, den Benutzer zu tragen, wobei der Sitz (11) eine Sitzfläche (21) umfasst, die beweglich auf der Referenzbasis (27) mit Hilfe von Positioniermitteln (26) angeordnet ist, umfassend einen Positionsgeber der Sitzfläche, der an die Bilderzeugungsmittel (12) ein für die Position der Sitzfläche (21) repräsentatives Signal überträgt, wobei die Bilderzeugungsmittel aus Signalen, die vom statischen Positionsgeber (17) und vom Positionsgeber der Sitzfläche entsandt werden, die Position der Sitzfläche (21) in Bezug zur Referenzbasis (27) bestimmen und in dem virtuellen Raum Bildsignale erzeugen, die den Sitz (11) darstellen, dessen Position in dem dem Benutzer präsentierten virtuellen Raum jener des Sitzes (11) im realen Raum entspricht.

8. Vorrichtung zur visuellen Darstellung eines virtuellen Raums nach den Ansprüchen 6 oder 7, **dadurch gekennzeichnet, dass** der Sitz (11) eine Rückenlehne (22) umfasst, die mit der Sitzfläche (21) verbunden und zu dieser mit Hilfe von Scharniermitteln (25) neigbar ist, umfassend einen Neigungssensor der Rückenlehne, der an die Bilderzeugungsmittel (12) ein für die Neigung der Rückenlehne (22) repräsentatives Signal überträgt, wobei die Bilderzeugungsmittel (12) aus Signalen, die vom Positionsgeber der Sitzfläche und vom Neigungssensor der Rückenlehne entsandt werden, die Position der Rückenlehne (22) in Bezug zur Referenzbasis (27) bestimmen und im virtuellen Raum Bildsignale erzeugen, die den Sitz (11) darstellen, dessen Position und Neigung der Rückenlehne (22) in dem dem Benutzer präsentierten virtuellen Raum jenen der Rückenlehne (11) im realen Raum entsprechen.

9. Vorrichtung zur visuellen Darstellung eines virtuellen Raums nach einem der Ansprüche 6 bis 8, **dadurch gekennzeichnet, dass** die Bilderzeugungsmittel (12) ein erstes Bilderzeugungsmodul (41), das dazu ausgeführt ist, erste für erste Bilder repräsentative Signale zu erzeugen, und ein zweites Bilderzeugungsmodul (42) umfassen, das dazu ausgeführt ist, zweite für zweite Bilder repräsentative Signale zu erzeugen, wobei die beiden Bilderzeugungsmodule (41, 42) Daten untereinander austauschen, um eine zeitliche Kohärenz bei der Erzeugung der ersten Signale und der zweiten Signale zu gewährleisten.

10. Vorrichtung zur visuellen Darstellung eines virtuellen Raums nach Anspruch 9, **dadurch gekennzeichnet, dass** die beiden Bilderzeugungsmodule (41, 42) Daten untereinander austauschen, um das Senden der ersten Signale und der zweiten Signale an die Bildwiedergabemittel (15) zu synchronisieren.
